(19) Europäisches Patentamt
European Patent Office
Office européen des brevets

(11) **EP 4 261 858 A1**

(12) **EUROPEAN PATENT APPLICATION**
published in accordance with Art. 153(4) EPC

(43) Date of publication:
**18.10.2023 Bulletin 2023/42**

(21) Application number: **21903604.3**

(22) Date of filing: **15.10.2021**

(51) International Patent Classification (IPC):
*H01F 38/14* (2006.01)     *H02J 50/10* (2016.01)
*H02J 50/00* (2016.01)     *H01F 1/03* (2006.01)
*B60L 53/12* (2019.01)

(52) Cooperative Patent Classification (CPC):
**B60L 53/12; H01F 1/03; H01F 38/14; H02J 50/00;**
**H02J 50/10;** Y02T 10/70; Y02T 10/7072;
Y02T 90/14

(86) International application number:
**PCT/KR2021/014398**

(87) International publication number:
**WO 2022/124557 (16.06.2022 Gazette 2022/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.12.2020 KR 20200171641**

(71) Applicant: SKC Co., Ltd.
**Suwon-si, Gyeonggi-do 16338 (KR)**

(72) Inventors:
• KIM, Nah Young
  Suwon-si, Gyeonggi-do 16338 (KR)
• LEE, Seunghwan
  Suwon-si, Gyeonggi-do 16338 (KR)
• CHOI, Jong Hak
  Suwon-si, Gyeonggi-do 16338 (KR)
• KIM, Tae Kyoung
  Suwon-si, Gyeonggi-do 16338 (KR)

(74) Representative: **Dehns**
**St. Bride's House**
**10 Salisbury Square**
**London EC4Y 8JD (GB)**

(54) **WIRELESS CHARGING DEVICE AND TRANSPORTATION MEANS COMPRISING SAME**

(57)     The wireless charging device according to an embodiment allows adjustment of characteristics, including the distance between a coil and a magnetic material, to be within particular numerical ranges and thus has high charging efficiency, facilitates assembly, and can be improved in durability. Therefore, the wireless charging device is useful in a transportation means, such as an electric vehicle, requiring high-capacity power transmission between a transmitter and a receiver.

[Fig. 4]

EP 4 261 858 A1

**Description**

**Technical Field**

Embodiments relate to a wireless charging device and to a transportation means (vehicle) comprising the same. More specifically, the embodiments relate to a wireless charging device with enhanced electrical and mechanical properties and to a transportation means comprising the same such as an electric vehicle.

**Background Art**

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

[Prior Art Document]

(Patent Document 1) Korean Laid-open Patent Publication No. 2011-0042403

**Disclosure of Invention**

**Technical Problem**

A wireless charging device used as a transceiver in a transportation means such as an electric vehicle is provided with a coil, a magnetic body, and a shield unit, and the performance of the device varies depending on various variables such as the distance between them and the size and composition of each component.

For example, as a magnetic body is spaced apart from a coil, the inductance decreases, thereby reducing the Q factor of the wireless charging device, which causes a decrease in charging efficiency and an increase in heat generation. On the other hand, as the distance between a coil and a magnetic body is closer, the inductance is increased, whereas it is difficult to assemble the coil and the magnetic unit that are in close contact, and it may be vulnerable to external impact.

As a result of research conducted by the present inventors, it has been discovered that when some characteristics, inclusive of the distance between the coil and the magnetic body in the wireless charging device, are adjusted within a specific formula range, the charging efficiency is high, while its assembly is easy, and the durability is enhanced.

Accordingly, the problem to be solved by the embodiment is to provide a wireless charging device with enhanced charging efficiency and a transportation means comprising the same.

**Solution to Problem**

According to an embodiment, there is provided a wireless charging device, which comprises a coil unit comprising a conductive wire; a magnetic unit disposed on the coil unit; and a shield unit disposed on the magnetic unit; wherein the following Relationship (1) at a frequency of 85 kHz is satisfied:

$$1 \leq (Q + Ls) / (D^2 \times Rs) \ ... \ (1)$$

Here, Q is the Q factor of the wireless charging device, Ls is the inductance ($\mu$H) measured through the coil unit, Rs is the resistance (m$\Omega$) measured through the coil unit, and D is the distance (mm) between the coil unit and the magnetic unit. Q, Ls, Rs, and D are numerical values without respective units.

According to another embodiment, there is provided a wireless charging device, which comprises a coil unit comprising a conductive wire; a magnetic unit disposed on the coil unit; and a shield unit disposed on the magnetic unit; wherein the distance between the coil unit and the magnetic unit is 0.5 mm to 7 mm, and at a frequency of 85 kHz, the Q factor of the wireless charging device is 300 to 1,000, the inductance measured through the coil unit is 30 $\mu$H to 200 $\mu$H, and the resistance measured through the coil unit is 40 m$\Omega$ to 200 m$\Omega$.

According to still another embodiment, there is provided a transportation means comprising the wireless charging device.

**Advantageous Effects of Invention**

According to the embodiments, it is possible to provide a wireless charging device with high charging efficiency, easy assembly, and enhanced durability by adjusting the characteristics, inclusive of the distance between the coil and the magnetic body, within a specific formula range.

Accordingly, the wireless charging device can be advantageously used in a transportation means such as electric vehicles that requires large-capacity power transmission between a transmitter and a receiver.

**Brief Description of Drawings**

Figs. 1, 2, and 3 are each an exploded perspective view, a perspective view, and a cross-sectional view of a wireless charging device according to an embodiment.

Fig. 4 is an enlarged cross-sectional view of a wireless charging device according to an embodiment.

Fig. 5 shows an example of a plan view of a coil unit.

Fig. 6 shows an example of a cross-sectional view of a transmitter and a receiver for wireless charging.

Fig. 7 shows a transportation means according to an embodiment.

<Explanation of Reference Numerals>

| | | | |
|---|---|---|---|
| 1: | transportation means | 10: | wireless charging device |
| 21: | receiver | 22: | transmitter |
| 30: | magnetic flux | | |
| 100: | support unit | 200: | coil unit |
| 300: | magnetic unit | 400: | shield unit |
| 600: | housing | 600: | lower housing |
| 600: | lateral housing | 600: | upper housing |
| Id: | inner dimension | Od: | outer dimension |
| C: | diameter of a conductive wire | | |
| D: | distance between a coil unit and a magnetic unit | | |
| M: | thickness of a magnetic unit | | |
| S: | thickness of a shield unit | | |
| V: | distance between a shield unit and a magnetic unit | | |

**Best Mode for Carrying out the Invention**

In the following description of the embodiments, in the case where an element is mentioned to be disposed "on" or "under" another element, it means not only that one element is directly formed "on" or "under" another element, but also that one element is indirectly disposed on or under another element with other element(s) interposed between them.

In this specification, the upper/lower relationship of the respective components is described with reference to the accompanying drawings for easy understanding. However, when an object is observed in a manner different from the drawing, it should be understood that the upper/lower relationship of the components varies depending on the direction of observation. In addition, for the sake of description, the sizes of individual elements in the appended drawings may be exaggeratedly depicted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

## Wireless charging device

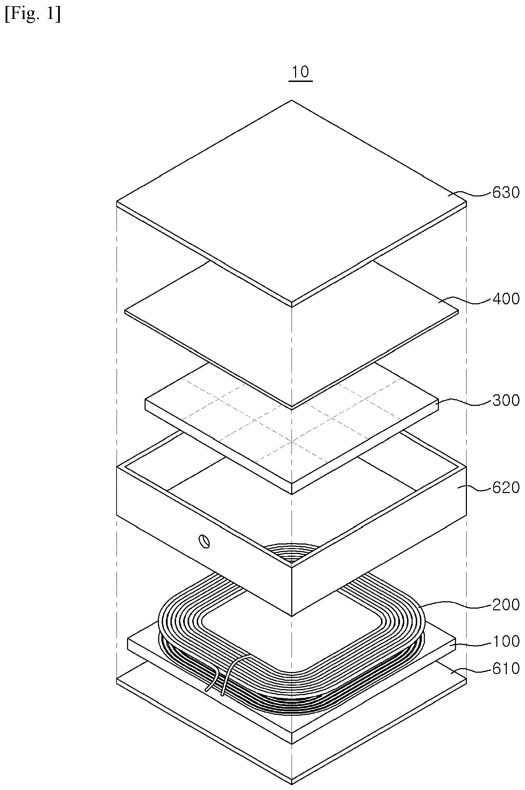

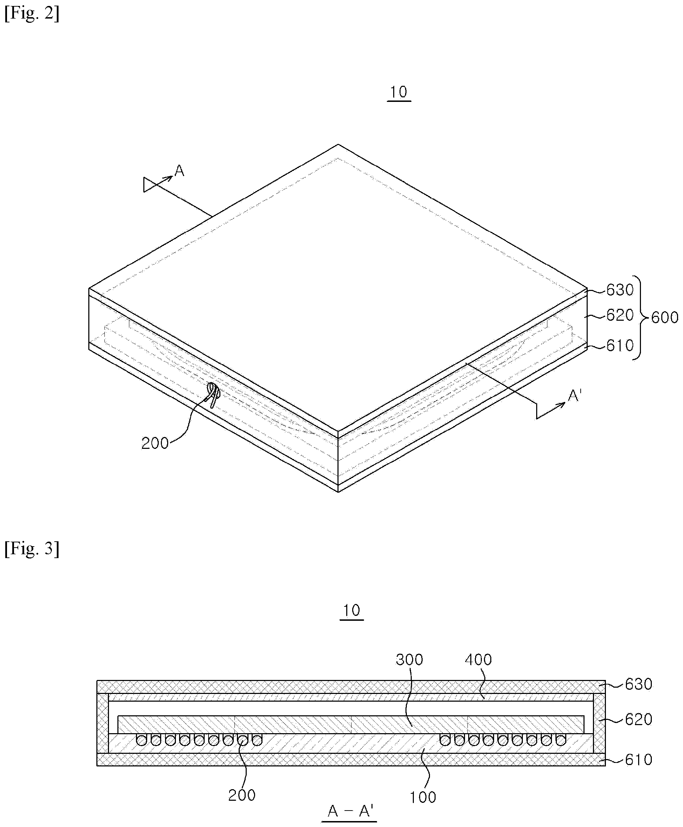

Figs. 1, 2, and 3 are each an exploded perspective view, a perspective view, and a cross-sectional view of a wireless charging device according to an embodiment.

The wireless charging device (10) according to an embodiment of the present invention comprises a coil unit (200) comprising a conductive wire; a magnetic unit (300) disposed on the coil unit (200); and a shield unit (400) disposed on the magnetic unit (300). In addition, the wireless charging device (10) may further comprise a support unit (100) for supporting the coil unit (200) and a housing (610, 620, 630) for protecting the components.

## Configuration of the device and relationship between the characteristics

The wireless charging device according to an embodiment satisfies the following Relationship (1) at a frequency of 85 kHz:

$$1 \leq (Q + Ls) / (D^2 \times Rs) \dots (1)$$

Here, Q is the Q factor of the wireless charging device, Ls is the inductance ($\mu$H) measured through the coil unit, Rs is the resistance (m$\Omega$) measured through the coil unit, and D is the distance (mm) between the coil unit and the magnetic unit.

Q, Ls, Rs, and D are numerical values without respective units. That is, inductance ($\mu$H), resistance (m$\Omega$), and distance (mm), excluding the Q factor, among the characteristics used in Relationship (1) have their own units. However, numerical values alone without units are used in Relationship (1). Therefore, the calculated value in Relationship (1) does not have a unit as well.

The wireless charging device according to an embodiment can have high charging efficiency, easy assembly, and enhanced durability as the characteristics, inclusive of the distance between the coil unit and the magnetic unit, are adjusted within a specific formula range.

The calculated value in Relationship (1) may be 1 or more, for example, 1.2 or more, 1.3 or more, 1.5 or more, or 2 or more. In addition, the calculated value in Relationship (1) may be 100 or less, 50 or less, 40 or less, 30 or less, 10 or less, 5 or less, or 3 or less. Specifically, the calculated value in Relationship (1) may be 1 to 100, 1 to 50, 1 to 30, 1 to 10, or 1 to 5.

The calculated value in Relationship (1) is determined by the Q factor of the wireless charging device, the distance between the coil unit and the magnetic unit, and the inductance and resistance measured through the coil unit.

## Exemplary characteristics of the device

The Q factor is also called a quality factor as is well known in the art, and it stands for quality according to a frequency of a current or a resonance frequency in a resonance circuit. Since the Q factor is calculated as a ratio of energy stored in a resonator and energy lost, the higher the Q factor, the better the resonance characteristics at a corresponding frequency. The Q factor is calculated from inductance and resistance at a specific frequency measured using an LCR meter or the like, and it is a value without a unit.

The wireless charging device may have a high Q factor in the vicinity of a standard frequency for wireless charging of an electric vehicle. The standard frequency for wireless charging of an electric vehicle may be less than 100 kHz, for example, 79 kHz to 90 kHz, specifically, 81 kHz to 90 kHz, more specifically, about 85 kHz. It is a band distinct from the frequency applied to mobile electronic devices such as cell phones.

The wireless charging device may have a Q factor of 300 or more at a frequency of 85 kHz. For example, the Q factor of the wireless charging device may be 400 or more at a frequency of 85 kHz. Specifically, the Q factor of the wireless charging device may be 430 or more, 450 or more, 500 or more, 550 or more, 600 or more, 620 or more, or 630 or more at a frequency of 85 kHz. In addition, the Q factor of the wireless charging device may be 2,000 or less, 1,000 or less, 900 or less, 800 or less, 700 or less, 600 or less, or 500 or less at a frequency of 85 kHz. More specifically, the Q factor of the wireless charging device may be 300 to 1,000, 300 to 600, or 400 to 900 at a frequency of 85 kHz.

The Q factor of the wireless charging device may vary depending on the materials and arrangements of the respective components. For example, the Q factor of the wireless charging device may vary depending on whether the material of the magnetic unit is composed of a sintered ferrite material or a polymer-based magnetic material. In addition, since the inductance and resistance measured through the coil unit vary depending on the diameter of the conductive wire that constitutes the coil unit or the number of turns of the conductive wire, the Q factor may also vary accordingly.

The inductance measured through the coil unit may be 30 $\mu$H or more, 50 $\mu$H or more, 70 $\mu$H or more, or 90 $\mu$H or more, and 120 $\mu$H or less, 100 $\mu$H or less, 80 $\mu$H or less, 70 $\mu$H or less, or 60 $\mu$H or less. Specifically, it may be 30 $\mu$H to 60 $\mu$H or 70 $\mu$H to 120 $\mu$H, but it is not particularly limited thereto. In addition, the resistance measured through the coil unit may be 40 m$\Omega$ or more, 50 m$\Omega$ or more, 60 m$\Omega$ or more, or 70 m$\Omega$ or more, and 100 m$\Omega$ or less, 90 m$\Omega$ or less, 80 m$\Omega$ or less, or 70 m$\Omega$ or less. Specifically, it may be 40 m$\Omega$ to 70 m$\Omega$ or 70 m$\Omega$ to 100 m$\Omega$. In addition, the inductance measured through the coil unit may be 40 $\mu$H or more at a frequency of 85 kHz, and the resistance measured through the coil unit may be 90 m$\Omega$ or less at a frequency of 85 kHz. However, the inductance and resistance measured through the coil unit may vary depending on the type of the coil unit and the distance from the magnetic unit, and they are not limited to the ranges exemplified above. In addition, the inductance and resistance may be measured under a specific voltage condition, for example, a voltage of about 5V, but it is not particularly limited thereto.

**Relationship between the components of the device**

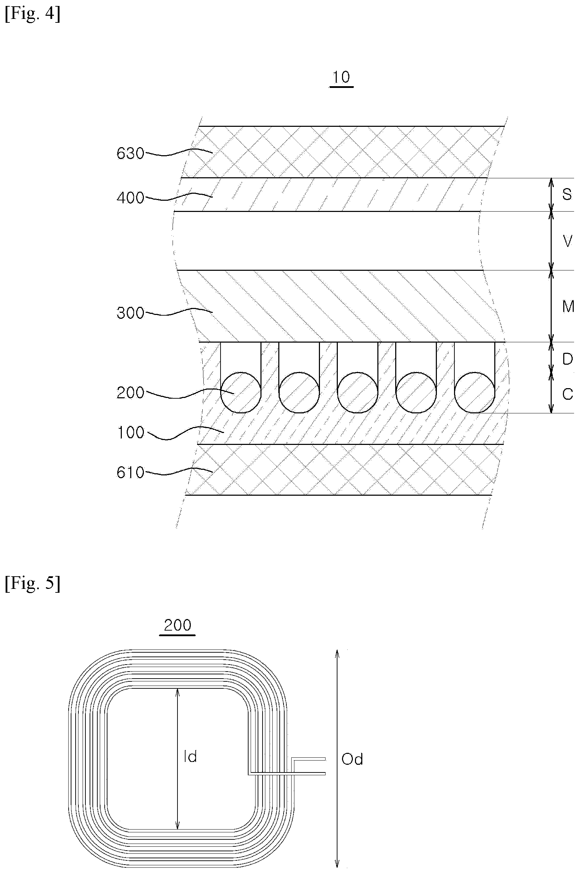

Fig. 4 is an enlarged cross-sectional view of a wireless charging device according to an embodiment. Referring to Fig. 4, the distance (D) between the coil unit (200) and the magnetic unit (300) may be adjusted within a certain range. For example, as the magnetic unit is spaced apart from the coil unit, the inductance decreases, thereby reducing the Q factor of the wireless charging device, which causes a decrease in charging efficiency and an increase in heat generation. On the other hand, as the distance between the coil unit and the magnetic unit is closer, the inductance is increased, whereas it is difficult to assemble the coil unit and the magnetic unit that are in close contact, and it may be vulnerable to external impact.

Specifically, the distance between the coil unit and the magnetic unit may be greater than 0 mm, 0.5 mm or more, 1 mm or more, 1.5 mm or more, 2 mm or more, or 2.5 mm or more. In addition, the distance between the coil unit and the magnetic unit may be 10 mm or less, 7 mm or less, 5 mm or less, 4 mm or less, 3.5 mm or less, 3 mm or less, or 2.5 mm or less. For example, the distance between the coil unit and the magnetic unit may be 0.5 mm to 7 mm, 1 mm to 5 mm, 1.5 mm to 4 mm, 1.5 mm to 3.5 mm, 2 mm to 3.5 mm, or 2.5 mm to 3.5 mm. More specifically, the distance between the coil unit and the magnetic unit may be 1.5 mm to 2.5 mm.

**Coil unit**

The coil unit comprises a conductive wire. The conductive wire comprises a conductive material. For example, the conductive wire may comprise a conductive metal. Specifically, the conductive wire may comprise at least one metal selected from the group consisting of copper, nickel, gold, silver, zinc, and tin.

The conductive wire may be a litz wire in which a plurality of fine strands are twisted and then covered. For example, the litz wire may be composed of 10 or more, 100 or more, or 500 or more fine strands. Specifically, it may be composed of 500 to 1,500 fine strands.

In addition, the conductive wire may be covered with an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may be wound in the form of a planar coil. Specifically, the planar coil may comprise a planar spiral coil. In addition, the planar shape of the coil unit may be a circle, an ellipse, a polygon, or a polygonal shape with rounded corners, but it is not particularly limited thereto.

Fig. 5 shows an example of a plan view of a coil unit. Referring to Fig. 5, the coil unit (200) may have a hollow shape on a plane; thus, it may have an outer dimension (or outer diameter) (Od) and an inner dimension (or inner diameter) (Id). For example, the outer dimension and the inner dimension may refer to the outer diameter and the inner diameter, respectively, when the coil unit has a circular donut shape on a plane. When the coil unit has a quadrangular donut shape on a plane, they may refer to the length of the side of the outer quadrangular shape and the length of the side of the empty inner quadrangular area.

Specifically, the outer dimension (Od) of the coil unit (200) may be 50 mm to 1,000 mm, 100 mm to 500 mm, 100 mm to 300 mm, 200 mm to 800 mm, 300 mm to 400 mm, or 500 mm to 1,000 mm. In addition, the inner dimension (Id) of the coil unit may be 5 mm to 300 mm, 10 mm to 200 mm, 100 mm to 200 mm, 150 mm to 250 mm, or 20 mm to 150 mm.

The number of turns of the conductive wire wound in the planar coil may be 5 to 50 times, 10 to 30 times, 5 to 30 times, 15 to 50 times, or 20 to 50 times.

As a specific example, the coil unit is a planar spiral coil in which the conductive wire is wound 5 to 15 times and may have an outer dimension of 300 mm to 400 mm and an inner dimension of 100 mm to 200 mm.

Within the preferred dimensions and specification ranges of the planar coil as described above, it can be appropriately used in the fields such as electric vehicles that require large-capacity power transmission.

The distance between the conductive wires in the planar coil shape may be 0.1 cm to 1 cm, 0.1 cm to 0.5 cm, or 0.5 cm to 1 cm.

Referring to Fig. 4, the diameter (C) of the conductive wire that constitutes the coil unit (200) may also be adjusted within a certain range. For example, the diameter of the conductive wire may be 1 mm or more, 2 mm or more, 3 mm or more, 4 mm or more, or 5 mm or more. In addition, the diameter of the conductive wire may be 10 mm or less, 8 mm or less, 7 mm or less, 6 mm or less, or 5 mm or less. Specifically, the diameter of the conductive wire may be 1 mm to 10 mm or 2 mm to 8 mm. More specifically, the diameter of the conductive wire may be 3 mm to 7 mm.

**Magnetic unit**

The magnetic unit is disposed on the coil unit to increase wireless charging efficiency.

The material of the magnetic unit is not particularly limited and may be a magnetic material used in a wireless charging device.

For example, the magnetic unit may comprise at least one of a ferrite magnetic material and a polymer-type magnetic material.

As an example, the magnetic unit may comprise a ferrite-based magnetic material. For example, the specific chemical formula of the ferrite-based magnetic material may be represented by $MOFe_2O_3$ (wherein M is one or more divalent metal elements such as Mn, Zn, Cu, and Ni). The ferrite-based magnetic material is preferably a sintered one from the viewpoint of such magnetic characteristics as magnetic permeability. The sintered magnetic material may be prepared in the form of a sheet or a block by mixing raw materials, followed by calcining, pulverizing, mixing with a binder resin, molding, and sintering. Specifically, the ferrite-based magnetic material may comprise a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 85 kHz.

As another example, the magnetic unit may comprise a magnetic powder and a binder resin. As a result, since the magnetic powder is coupled with each other by the binder resin, the magnetic unit may have fewer defects over a large area and less damage caused by an impact. The magnetic powder may be an oxide-based magnetic powder, a metal-based magnetic powder, or a mixed powder thereof. For example, the oxide-based magnetic powder may be a ferrite-based powder, specifically, a Ni-Zn-based, Mg-Zn-based, or Mn-Zn-based ferrite powder. In addition, the metal-based magnetic powder may be a Fe-Si-Al alloy magnetic powder or a Ni-Fe alloy magnetic powder, more specifically, a sendust powder or a permalloy powder. In addition, the magnetic powder may be a nanocrystalline magnetic powder. For example, it may be a Fe-based nanocrystalline magnetic powder. Specifically, it may be a Fe-Si-Al-based nanocrystalline magnetic powder, a Fe-Si-Cr-based nanocrystalline magnetic powder, or a Fe-Si-B-Cu-Nb-based nanocrystalline magnetic powder. The magnetic powder may have an average particle diameter in the range of 3 nm to 1 mm, 1 $\mu$m to 300 $\mu$m, 1 $\mu$m to 50 $\mu$m, or 1 $\mu$m to 10 $\mu$m. The magnetic unit may comprise the magnetic powder in an amount of 10% by weight or more, 50% by weight or more, 70% by weight or more, or 85% by weight or more. For example, the magnetic unit may comprise the magnetic powder in an amount of 10% by weight to 99% by weight, 10% by weight to 95% by weight, or 50% by weight to 95% by weight. Examples of the binder resin include a polyimide resin, a polyamide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin, but it is not limited thereto.

The magnetic unit may have a sheet shape or a block shape. Referring to Fig. 4, the magnetic unit (300) may have a thickness (M) of 0.5 mm to 10 mm, specifically, 1 mm to 9 mm, 2 mm to 8 mm, or 3 mm to 7 mm. In addition, the magnetic unit may have an area of 200 cm$^2$ or more, 400 cm$^2$ or more, or 600 cm$^2$ or more, and 10,000 cm$^2$ or less. In addition, the magnetic unit may be configured by combining a plurality of unit magnetic materials. In such an event, the area of the individual unit magnetic materials may be 60 cm$^2$ or more, 90 cm$^2$, or 95 cm$^2$ to 900 cm$^2$.

The magnetic unit may have a shape extending in a direction parallel to the coil unit. For example, the magnetic unit may have a flat sheet shape, the coil unit may have a planar coil shape, and the magnetic unit and the coil unit may be disposed parallel to each other. The planar shape of the magnetic unit may be a polygon, a polygon with rounded corners, or a circular shape. For example, when the magnetic unit has a shape of a square sheet, the length of one side may be 100 mm to 700 mm, 200 mm to 500 mm, or 300 mm to 350 mm. As a specific example, the magnetic unit may be a rectangular sheet having a side length of 300 mm to 350 mm and a thickness of 3 mm to 7 mm.

The magnetic unit may have magnetic characteristics of a certain level in the vicinity of a standard frequency for wireless charging of an electric vehicle. The magnetic permeability of the magnetic unit at 85 kHz may vary depending on the material. It may be 5 or more, for example, 5 to 150,000 and may specifically be in the range of 5 to 300, 500 to 3,500, or 10,000 to 150,000, depending on the specific material. In addition, the magnetic permeability loss of the magnetic unit at 85 kHz may vary depending on the material. It may be 0 or more, for example, 0 to 50,000 and may specifically be 0 to 1,000, 1 to 100, 100 to 1,000, or 5,000 to 50,000, depending on the specific material.

**Shield unit**

The shield unit is disposed on the magnetic unit to suppress electromagnetic interference (EMI) that may be generated by the leakage of electromagnetic waves to the outside through electromagnetic shielding.

The shield unit may be disposed to be spaced apart from the coil unit by a predetermined interval. For example, the spaced distance between the shield unit and the coil unit may be 10 mm or more or 15 mm or more, specifically, 10 mm to 30 mm or 10 mm to 20 mm.

In addition, the shield unit may be disposed to be spaced apart from the magnetic unit by a predetermined interval. Referring to Fig. 4, the spaced distance (V) between the shield unit (400) and the magnetic unit (300) may be 3 mm or more, 5 mm or more, 3 mm to 10 mm, or 4 mm to 7 mm.

The shield unit may comprise a metal. Specifically, the shield unit may be a metal plate, but it is not particularly limited thereto. As a specific example, the material of the shield unit may be aluminum. Other metals or alloy materials having an electromagnetic wave shielding capability may be used.

Referring to Fig. 4, the shield unit (400) may have a thickness (S) of 0.2 mm to 10 mm, 0.5 mm to 5 mm, or 1 mm to 3 mm. In addition, the shield unit may have an area of 200 cm$^2$ or more, 400 cm$^2$ or more, or 600 cm$^2$ or more.

The shield unit may have a shape extending in a direction parallel to the magnetic unit. For example, the magnetic unit and the shield unit may have a flat sheet shape and may be disposed parallel to each other. The planar shape of the shield unit may be a polygon, a polygon with rounded corners, or a circular shape. For example, when the shield unit has a shape of a square sheet, the length of one side may be 100 mm to 700 mm, 200 mm to 500 mm, or 300 mm to 400 mm. As a specific example, the magnetic unit may be a rectangular sheet having a side length of 300 mm to 400 mm and a thickness of 1 mm to 3 mm.

**Other components**

Referring to Figs. 1 to 3, the wireless charging device (10) may further comprise a support unit (100) for supporting the coil unit (200). The support unit may have a flat plate structure or a structure in which a groove is formed in compliance with a coil shape to fix the coil unit. For example, the support unit (100) may be a coil tray.

In addition, the wireless charging device (10) according to an embodiment may further comprise a spacer for securing a space between the shield unit (400) and the magnetic unit (300). The material and structure of the spacer may be a material and structure of a conventional spacer used in a wireless charging device.

The wireless charging device (10) according to an embodiment may further comprise a housing (600) for protecting the components described above. For example, the housing may have a configuration in which a lower housing (610), a lateral housing (620), and an upper housing (630) are combined, but it is not particularly limited thereto.

The housing allows such components as the coil unit, the shield unit, and the magnetic unit to be properly disposed and assembled. The material and structure of the housing may be a material and structure of a conventional housing used in a wireless charging device. For example, the housing may be manufactured using a plastic material having excellent durability.

**Exemplary specific configuration and characteristics of the device**

The wireless charging device according to another embodiment comprises a coil unit comprising a conductive wire; a magnetic unit disposed on the coil unit; and a shield unit disposed on the magnetic unit; wherein the distance between the coil unit and the magnetic unit is 0.5 mm to 7 mm, and at a frequency of 85 kHz, the Q factor of the wireless charging device is 300 to 1,000, the inductance measured through the coil unit is 30 $\mu$H to 200 $\mu$H, and the resistance measured through the coil unit is 40 m$\Omega$ to 200 m$\Omega$.

As a more specific example, at a frequency of 85 kHz, the Q factor may be 300 to 600, the inductance measured through the coil unit may be 30 $\mu$H to 70 $\mu$H, and the resistance measured through the coil unit may be 40 m$\Omega$ to 70 m$\Omega$. In addition, the coil unit is a planar spiral coil in which the conductive wire is wound 5 to 15 times and may have an outer dimension of 300 mm to 400 mm and an inner dimension of 100 mm to 200 mm. The conductive wire may have a diameter of 3 mm to 7 mm. In addition, the magnetic unit may be a rectangular sheet having a side length of 300 mm to 350 mm and a thickness of 3 mm to 7 mm. The shield unit may be a rectangular sheet having a side length of 300 mm to 400 mm and a thickness of 1 mm to 3 mm. In addition, the distance between the coil unit and the magnetic unit may be 1.5 mm to 2.5 mm.

As another more specific example, at a frequency of 85 kHz, the Q factor may be 500 to 800, the inductance measured through the coil unit may be 70 $\mu$H to 130 $\mu$H, and the resistance measured through the coil unit may be 70 m$\Omega$ to 100 m$\Omega$. In addition, the coil unit is a planar spiral coil in which the conductive wire is wound 10 to 20 times and may have an outer dimension of 300 mm to 400 mm and an inner dimension of 70 mm to 170 mm. The conductive wire may have a diameter of 3 mm to 7 mm. In addition, the magnetic unit may be a rectangular sheet having a side length of 300 mm to 350 mm and a thickness of 3 mm to 7 mm. The shield unit may be a rectangular sheet having a side length of 300 mm to 400 mm and a thickness of 1 mm to 3 mm. In addition, the distance between the coil unit and the magnetic unit may be 1.5 mm to 2.5 mm.

**Transportation means**

The wireless charging device can be advantageously used in a transportation means such as electric vehicles that requires large-capacity power transmission between a transmitter and a receiver.

In addition, the wireless charging device may be applied to a station that transmits wireless power in response to the transportation means. That is, the station according to an embodiment may also comprise a wireless charging device having the configuration and characteristics as described above.

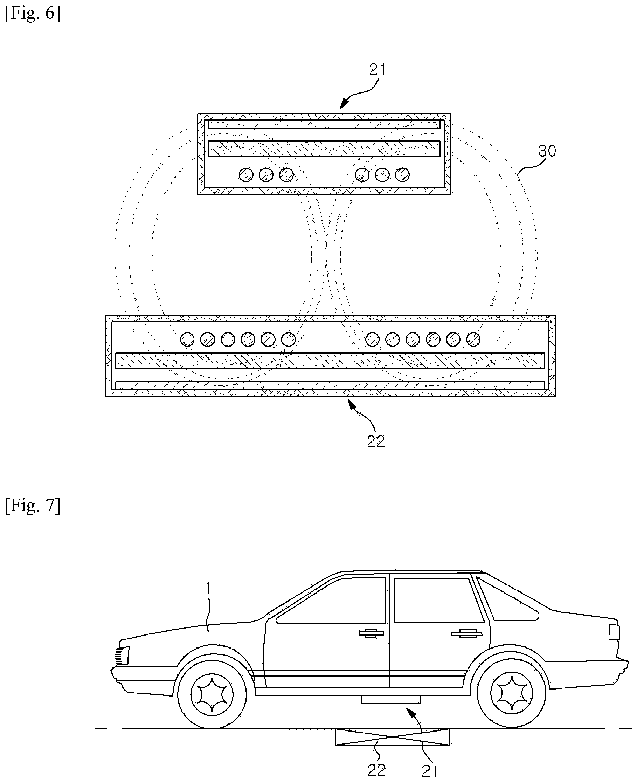

Fig. 6 shows an example of a cross-sectional view of a receiver (21) and a transmitter (22) for wireless charging. The receiver (21) and the transmitter (22) each have the same structure as the wireless charging device according to the embodiment described above. When power is applied to the transmitter (22) during wireless charging, power induced by the magnetic flux (30) is generated in the receiver (21), and wireless power transmission is performed.

Fig. 7 shows an electric vehicle, specifically, an electric vehicle provided with a wireless charging device. Since it is provided with a wireless charging device on its lower side, it may be charged wirelessly in a parking area equipped with a wireless charging system for an electric vehicle.

Referring to Fig. 7, the transportation means (1) according to an embodiment comprises a wireless charging device according to the embodiment as a receiver (21). The wireless charging device may serve as a receiver for wireless charging of the transportation means (1) and may receive power from a transmitter (22) for wireless charging.

The transportation means according to an embodiment comprises a wireless charging device, wherein the wireless charging device comprises a coil unit comprising a conductive wire; a magnetic unit disposed on the coil unit; and a shield unit disposed on the magnetic unit; wherein the following Relationship (1) at a frequency of 85 kHz is satisfied:

$$1 \leq (Q + Ls) / (D^2 \times Rs) \dots (1)$$

Here, Q is the Q factor of the wireless charging device, Ls is the inductance ($\mu$H) measured through the coil unit, Rs is the resistance (m$\Omega$) measured through the coil unit, and D is the distance (mm) between the coil unit and the magnetic unit. Q, Ls, Rs, and D are numerical values without respective units.

The configuration and characteristics of each component of the wireless charging device adopted in the transportation means are as described above. In addition, the wireless charging device adopted in the transportation means has a value of Relationship (1) of 1 or more; thus, possible advantageous effects may be applied in the same manner as described above.

The transportation means may further comprise a battery for receiving power from the wireless charging device. The wireless charging device may receive power wirelessly and transmit it to the battery, and the battery may supply power to the driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

**Mode for the Invention**

Hereinafter, the embodiments will be described with more specific examples, but the scope of the embodiment is not limited to this scope.

**Manufacture example of a wireless charging device**

Figs. 1, 2, and 3 are each an exploded perspective view, a perspective view, and a cross-sectional view of a wireless charging device according to an embodiment. A wireless charging device was manufactured as shown in these drawings.

**Device A**

A coil tray was used as a support unit (100), and a coil unit (200) was accommodated and fixed in the groove of the coil tray. Referring to Fig. 5, the coil unit (200) was prepared as a planar spiral coil having a square shape as a whole with rounded corners having an external dimension (Od) of 320 mm × 320 mm and an internal dimension (Id) of 160 mm × 160 mm, in which a conductive wire (litz wire composed of 1,000 strands) with a diameter of 5 mm was wound 9 times.

A magnetic unit (300) was prepared to have a dimension of 320 mm × 320 mm × 5 mm (width × length × thickness), and the material of the magnetic unit was a sintered ferrite material or a polymer-type magnetic material. First, for the sintered ferrite material, a ferrite slurry was molded into a sheet form and sintered to obtain 16 ferrite units of 80 mm × 80 mm × 5 mm (width × length × thickness), which were then combined to prepare the magnetic unit of 320 mm × 320 mm × 5 mm (width × length × thickness). In addition, for the polymer-type magnetic material, a mold capable of forming a shape having a corresponding dimension (320 mm × 320 mm × 5 mm) was first manufactured, and a magnetic powder slurry was then injected into the mold using an injection molding machine to obtain the magnetic unit.

As a shield unit (400), an aluminum plate having a dimension of 350 mm × 350 mm × 2 mm (width × length × thickness) was used.

**Device B**

Referring to Fig. 5, a wireless charging device was prepared in the same manner as in Device A, except that the coil unit (200) was prepared as a planar spiral coil having a square shape as a whole with rounded corners having an external dimension (Od) of 320 mm × 320 mm and an internal dimension (Id) of 125 mm × 125 mm, in which a conductive wire (litz wire composed of 1,000 strands) with a diameter of 5 mm was wound 16 times.

**Device C**

A coil tray was used as a support unit (100), and a coil unit (200) was accommodated and fixed in the groove of the coil tray. Referring to Fig. 5, the coil unit (200) was prepared as a planar spiral coil having a rectangular shape as a whole with rounded corners having an external dimension (Od) of 675 mm × 534 mm and an internal dimension (Id) of 300 mm × 160 mm, in which a conductive wire (litz wire composed of 1,000 strands) with a diameter of 5 mm was wound 16 times.

A ferrite slurry was molded into a sheet form and sintered to obtain 16 ferrite units having a thickness of 5 mm, which were then combined to prepare the magnetic unit (300) of 675 mm × 534 mm × 5 mm (width × length × thickness).

As a shield unit (400), an aluminum plate having a dimension of 675 mm × 534 mm × 2 mm (width × length × thickness) was used.

**Test Example 1: Changes in characteristics according to the distance between the coil unit and the magnetic unit**

In the wireless charging device (Device A or B) prepared above, referring to Fig. 4, the distance (V) between the magnetic unit and the shield unit was fixed at 5.5 mm by a spacer, and the distance (D) between the coil unit and the magnetic unit was varied in which the inductance and resistance of the coil unit at a frequency of 85 kHz were measured using an LCR meter, from which the Q factor and the value of Relationship 1 were calculated. The results are shown in the table below.

$$Q \text{ factor} = 2 \times \pi \times f \times Ls / Rs$$

Here, f is the frequency (kHz), Ls is the inductance ($\mu$H) measured through the coil unit, and Rs is the resistance (m$\Omega$) measured through the coil unit.

$$[\text{Equation 1}] \ (Q + Ls) / (D^2 \times Rs)$$

Here, Q is the Q factor of the wireless charging device, Ls is the inductance ($\mu$H) measured through the coil unit, Rs is the resistance (m$\Omega$) measured through the coil unit, and D is the distance (mm) between the coil unit and the magnetic unit. Q, Ls, Rs, and D are numerical values without respective units.

**Test Example 2: Measurement of charging efficiency**

The wireless charging device A or B prepared above was used as a receiver for measuring charging efficiency, and the wireless charging device C prepared above was used as a transmitter. While the transmitter voltage was fixed at 380 V and the receiver current was fixed at 20 A, the transmitter current was changed to adjust the transmit power. When the received power of the receiver reached 8.8 kW, the charging efficiency was calculated according to the equation below. The results are shown in the table below.

$$\text{Charging efficiency (\%)} = (\text{received power (kW)} / \text{transmitted power (kW)}) \times 100$$

**Test Example 3: Evaluation of assemblability and durability**

The assemblability and durability of the wireless charging devices prepared above were evaluated. The results are shown in the table below according to the criteria below. The assemblability was evaluated as the difficulty in the manufacturing process of arranging and combining the respective components according to the corresponding standard. The durability was evaluated by whether or not the coupling of the internal components is maintained when an impact was repeatedly applied to the wireless charging device for a certain period of time.

- ○: Both assemblability and durability were good

- △: Either of assemblability and durability was not good

- ×: Neither of assemblability and durability was good

The results of Test Examples 1 to 3 are shown in Tables 1 and 2 below.

[Table 1]

| Device A | Distance between coil unit and magnetic unit (mm) | Test Ex. 1 | | | | Test Ex. 2 | Test Ex. 3 |
|---|---|---|---|---|---|---|---|
| | | Ls (μH) | Rs (mΩ) | Q factor | Relationship 1 | Charging efficiency (%) | Assemblability /durability |
| Sintered ferrite | 0 | 47.6 | 58 | 438 | - | - | × |
| | 0.5 | 47.3 | 57 | 443 | 34.40 | 87.5 | △ |
| | 1.0 | 47.2 | 57 | 442 | 8.58 | 87.5 | △ |
| | 1.5 | 47.0 | 57 | 440 | 3.80 | 87.5 | ○ |
| | 2.0 | 46.8 | 57 | 438 | 2.13 | 87.5 | ○ |
| | 2.5 | 46.7 | 57 | 437 | 1.36 | 87.5 | ○ |
| | 3.0 | 46.6 | 56 | 444 | 0.97 | 87.3 | △ |
| | 3.5 | 46.0 | 55 | 446 | 0.73 | 87.3 | △ |
| | 4.0 | 45.6 | 55 | 443 | 0.55 | 87.3 | △ |
| | 5.0 | 44.9 | 55 | 436 | 0.35 | 87.2 | △ |
| | 10.0 | 42.1 | 52 | 432 | 0.09 | 87.0 | △ |

(continued)

| Device A | Distance between coil unit and magnetic unit (mm) | Test Ex. 1 | | | | Test Ex. 2 | Test Ex. 3 |
|---|---|---|---|---|---|---|---|
| | | Ls (μH) | Rs (mΩ) | Q factor | Relationship 1 | Charging efficiency (%) | Assemblability /durability |
| Polymer-type magnetic material | 0 | 43.9 | 61 | 384 | - | - | × |
| | 0.5 | 43.9 | 59 | 397 | 29.90 | 86.3 | Δ |
| | 1.0 | 43.7 | 59 | 395 | 7.44 | 86.3 | Δ |
| | 1.5 | 43.7 | 58 | 402 | 3.42 | 86.3 | ○ |
| | 2.0 | 43.6 | 58 | 401 | 1.92 | 86.3 | ○ |
| | 2.5 | 43.6 | 57 | 408 | 1.27 | 86.3 | ○ |
| | 3.0 | 43.5 | 57 | 407 | 0.88 | 86.1 | Δ |
| | 3.5 | 43.2 | 56 | 412 | 0.66 | 86.1 | Δ |
| | 4.0 | 42.5 | 56 | 405 | 0.50 | 86.1 | Δ |
| | 5.0 | 41.4 | 54 | 409 | 0.33 | 86.1 | Δ |

[Table 2]

| Device B | Distance between coil unit and magnetic unit (mm) | Test Ex. 1 | | | | Test Ex. 2 | Test Ex. 3 |
|---|---|---|---|---|---|---|---|
| | | Ls (μH) | Rs (mΩ) | Q factor | Relationship 1 | Charging efficiency (%) | Assemblability /durability |
| Sintered ferrite | 0 | 101.8 | 86 | 632 | - | - | × |
| | 0.5 | 101.3 | 86 | 629 | 33.96 | 87.7 | Δ |
| | 1.0 | 100.8 | 85 | 633 | 8.63 | 87.7 | Δ |
| | 1.5 | 100.3 | 85 | 630 | 3.82 | 87.7 | ○ |
| | 2.0 | 100.1 | 85 | 629 | 2.14 | 87.7 | ○ |
| | 2.5 | 99.4 | 85 | 624 | 1.36 | 87.7 | ○ |
| | 3.0 | 99.1 | 85 | 622 | 0.94 | 87.4 | Δ |
| | 3.5 | 99.0 | 83 | 637 | 0.72 | 87.4 | Δ |
| | 4.0 | 98.5 | 81 | 649 | 0.58 | 87.3 | Δ |
| | 5.0 | 97.2 | 81 | 641 | 0.36 | 87.2 | Δ |
| | 10.0 | 95.2 | 80 | 635 | 0.09 | 87.0 | Δ |
| Polymer-type magnetic material | 0 | 98.1 | 84 | 623 | - | - | × |
| | 0.5 | 98.0 | 84 | 623 | 34.32 | 86.6 | Δ |
| | 1.0 | 97.8 | 84 | 621 | 8.56 | 86.6 | Δ |
| | 1.5 | 97.3 | 84 | 618 | 3.79 | 86.6 | ○ |
| | 2.0 | 97.0 | 83 | 624 | 2.17 | 86.6 | ○ |

(continued)

| Device B | Distance between coil unit and magnetic unit (mm) | Test Ex. 1 | | | | Test Ex. 2 | Test Ex. 3 |
|---|---|---|---|---|---|---|---|
| | | Ls (μH) | Rs (mΩ) | Q factor | Relationship 1 | Charging efficiency (%) | Assemblability /durability |
| | 2.5 | 96.7 | 83 | 622 | 1.39 | 86.6 | ○ |
| | 3.0 | 96.3 | 82 | 627 | 0.98 | 86.3 | Δ |
| | 3.5 | 96.0 | 82 | 625 | 0.72 | 86.3 | Δ |
| | 4.0 | 95.7 | 82 | 623 | 0.55 | 86.3 | Δ |
| | 5.0 | 94.6 | 81 | 623 | 0.35 | 86.0 | Δ |
| | 10.0 | 93.1 | 80 | 621 | 0.09 | 85.8 | Δ |

As can be seen from Tables 1 and 2, the inductance, resistance, and Q factor were changed according to the change in the distance between the coil unit and the magnetic unit, and the value of Equation 1 calculated therefrom were changed accordingly. In particular, in Test Example 1, when the calculated value of Relationship 1 was 1 or more, the best charging efficiency was measured in Test Example 2. In addition, the assemblability and durability were evaluated to be the best in Test Example 3 when the distance between the coil unit and the magnetic unit was within 1.5 mm to 2.5 mm.

**Claims**

1. A wireless charging device, which comprises a coil unit comprising a conductive wire; a magnetic unit disposed on the coil unit; and a shield unit disposed on the magnetic unit,
   wherein the following Relationship (1) at a frequency of 85 kHz is satisfied:

$$1 \leq (Q + Ls) / (D^2 \times Rs) \ldots (1)$$

   wherein Q is the Q factor of the wireless charging device,
   Ls is the inductance (μH) measured through the coil unit,
   Rs is the resistance (mΩ) measured through the coil unit,
   D is the distance (mm) between the coil unit and the magnetic unit, and
   Q, Ls, Rs, and D are numerical values without respective units.

2. The wireless charging device of claim 1, wherein the Q factor of the wireless charging device is 400 or more at a frequency of 85 kHz.

3. The wireless charging device of claim 1, wherein the inductance measured through the coil unit is 40 μH or more at a frequency of 85 kHz, and the resistance measured through the coil unit is 90 mΩ or less at a frequency of 85 kHz.

4. The wireless charging device of claim 1, wherein the distance between the coil unit and the magnetic unit is 1.5 mm to 2.5 mm.

5. The wireless charging device of claim 1, wherein the diameter of the conductive wire is 3 mm to 7 mm.

6. The wireless charging device of claim 1, wherein the shield unit is spaced apart from the coil unit by 10 mm or more.

7. The wireless charging device of claim 1, wherein the coil unit is a planar spiral coil in which the conductive wire is wound 5 to 15 times and has an outer dimension of 300 mm to 400 mm and an inner dimension of 100 mm to 200 mm.

8. The wireless charging device of claim 1, wherein the magnetic unit is a rectangular sheet having a side length of 300 mm to 350 mm and a thickness of 3 mm to 7 mm, and the shield unit is a rectangular sheet having a side length of 300 mm to 400 mm and a thickness of 1 mm to 3 mm.

9. The wireless charging device of claim 1, wherein the magnetic unit comprises at least one of a ferrite magnetic material and a polymer-type magnetic material, and the shield unit comprises a metal.

10. A wireless charging device, which comprises a coil unit comprising a conductive wire; a magnetic unit disposed on the coil unit; and a shield unit disposed on the magnetic unit,

wherein the distance between the coil unit and the magnetic unit is 0.5 mm to 7 mm, and
at a frequency of 85 kHz,
the Q factor of the wireless charging device is 300 to 1,000,
the inductance measured through the coil unit is 30 $\mu$H to 200 $\mu$H, and
the resistance measured through the coil unit is 40 m$\Omega$ to 200 m$\Omega$.

11. A transportation means, which comprises a wireless charging device, wherein the wireless charging device comprises a coil unit comprising a conductive wire; a magnetic unit disposed on the coil unit; and a shield unit disposed on the magnetic unit,
wherein the following Relationship (1) at a frequency of 85 kHz is satisfied:

$$1 \leq (Q + Ls) / (D^2 \times Rs) \dots (1)$$

wherein Q is the Q factor of the wireless charging device,
Ls is the inductance ($\mu$H) measured through the coil unit,
Rs is the resistance (m$\Omega$) measured through the coil unit,
D is the distance (mm) between the coil unit and the magnetic unit, and
Q, Ls, Rs, and D are numerical values without respective units.

[Fig. 1]

[Fig. 2]

10

630
620 } 600
610

200

[Fig. 3]

10

300    400

630
620
610

200    100

A – A'

[Fig. 4]

<u>10</u>

[Fig. 5]

<u>200</u>

[Fig. 6]

[Fig. 7]

## INTERNATIONAL SEARCH REPORT

| | |
|---|---|
| International application No. | |
| | **PCT/KR2021/014398** |

**A. CLASSIFICATION OF SUBJECT MATTER**

**H01F 38/14**(2006.01)i; **H02J 50/10**(2016.01)i; **H02J 50/00**(2016.01)i; **H01F 1/03**(2006.01)i; **B60L 53/12**(2019.01)i

According to International Patent Classification (IPC) or to both national classification and IPC

**B. FIELDS SEARCHED**

Minimum documentation searched (classification system followed by classification symbols)

H01F 38/14(2006.01); B60L 53/12(2019.01); B60L 53/38(2019.01); H01F 17/00(2006.01); H01F 27/28(2006.01); H02J 50/00(2016.01); H02J 50/12(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: Q-인자(Q-factor), 쉴드부(shield unit), 자성부(magnetic unit), 와이어코일(wire coil), 무선충전(wireless charging)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0136447 A (LG INNOTEK CO., LTD.) 10 December 2019 (2019-12-10) See paragraphs [0008]-[0063]. | 10 |
| A | | 1-9,11 |
| Y | KR 10-2017-0105418 A (OMRON AUTOMOTIVE ELECTRONICS CO., LTD.) 19 September 2017 (2017-09-19) See paragraph [0023]; and figure 1. | 10 |
| A | KR 10-2017-0106008 A (HYUNDAI MOTOR COMPANY et al.) 20 September 2017 (2017-09-20) See paragraphs [0079]-[0141]; and figures 1-8. | 1-11 |
| A | KR 10-2019-0087761 A (HYUNDAI MOTOR COMPANY et al.) 25 July 2019 (2019-07-25) See paragraphs [0067]-[0118]; and figures 1-5. | 1-11 |

| ☑ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 January 2022** | **21 January 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/014398**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0145694 A (WITRICITY CORPORATION) 20 December 2016 (2016-12-20) See paragraphs [0019]-[0043]; and figures 1-11b. | 1-11 |

Form PCT/ISA/210 (second sheet) (July 2019)

INTERNATIONAL SEARCH REPORT
Information on patent family members

International application No.

**PCT/KR2021/014398**

| Patent document cited in search report | | | Publication date (day/month/year) | Patent family member(s) | | | Publication date (day/month/year) |
|---|---|---|---|---|---|---|---|
| KR | 10-2019-0136447 | A | 10 December 2019 | KR | 10-2020-0104589 | A | 04 September 2020 |
| | | | | WO | 2019-231168 | A1 | 05 December 2019 |
| KR | 10-2017-0105418 | A | 19 September 2017 | JP | 2017-163676 | A | 14 September 2017 |
| | | | | JP | 6612657 | B2 | 27 November 2019 |
| | | | | US | 10366829 | B2 | 30 July 2019 |
| | | | | US | 2017-0263377 | A1 | 14 September 2017 |
| KR | 10-2017-0106008 | A | 20 September 2017 | KR | 10-1819321 | B1 | 17 January 2018 |
| | | | | US | 10516297 | B2 | 24 December 2019 |
| | | | | US | 2017-0264143 | A1 | 14 September 2017 |
| KR | 10-2019-0087761 | A | 25 July 2019 | CN | 110040010 | A | 23 July 2019 |
| | | | | DE | 102018130847 | A1 | 18 July 2019 |
| | | | | US | 2019-0221363 | A1 | 18 July 2019 |
| KR | 10-2016-0145694 | A | 20 December 2016 | CN | 106464030 | A | 22 February 2017 |
| | | | | CN | 106464030 | B | 13 September 2019 |
| | | | | EP | 3134956 | A1 | 01 March 2017 |
| | | | | EP | 3134956 | A4 | 24 January 2018 |
| | | | | JP | 2017-514452 | A | 01 June 2017 |
| | | | | JP | 6607922 | B2 | 20 November 2019 |
| | | | | TW | 201547149 | A | 16 December 2015 |
| | | | | TW | I574482 | B | 11 March 2017 |
| | | | | US | 09735628 | B2 | 15 August 2017 |
| | | | | US | 09917479 | B2 | 13 March 2018 |
| | | | | US | 2015-0303706 | A1 | 22 October 2015 |
| | | | | US | 2015-0303707 | A1 | 22 October 2015 |
| | | | | US | 2015-0303708 | A1 | 22 October 2015 |
| | | | | WO | 2015-161053 | A1 | 22 October 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 20110042403